# EUROPÄISCHE PATENTSCHRIFT

(11) **EP 3 478 975 B1**
(45) Veröffentlichungstag und Bekanntmachung des Hinweises auf die Patenterteilung: **06.04.2022**
(21) Anmeldenummer: 17742644.2
(22) Anmeldetag: 30.06.2017
(51) Int. Cl.: F16B 21/08, B60R 13/02

(54) **CLIP MIT EINEM KOPF UND EINEM SICH ENTLANG EINER LÄNGSACHSE VON DEM KOPF ERSTRECKENDEN SCHAFT**
CLIP WITH A HEAD AND A SHANK EXTENDING FROM THE HEAD ALONG A LONGITUDINAL AXIS
CLIP DOTÉ D'UNE TÊTE ET D'UNE TIGE S'ÉTENDANT LE LONG D'UN AXE LONGITUDINAL À PARTIR DE LA TÊTE

(30) Priorität: 04.07.2016 DE 102016008022
(43) Veröffentlichungstag der Anmeldung: 08.05.2019
(73) Patentinhaber: A. Raymond et Cie. SCS, 38000 Grenoble (FR)
(72) Erfinder: KOLB, Christian, 79589 Binzen (DE); SCHREIYÄCK, Daniel, 79591 Eimeidingen (DE)
(74) Vertreter: Tilmann, Max Wilhelm
(86) Internationale Anmeldenummer: PCT/EP2017/000778
(87) Internationale Veröffentlichungsnummer: WO 2018/007001

(56) Entgegenhaltungen:
- EP-A1- 1 989 451
- EP-A1- 2 855 950
- WO-A1-2011/115906
- DE-A1- 10 006 593
- JP-A- 2014 020 466
- US-A1- 2010 322 743

## Beschreibung

Die Erfindung betrifft einen Clip mit einem Kopf und einem sich entlang einer Längsachse von dem Kopf erstreckenden Schaft.

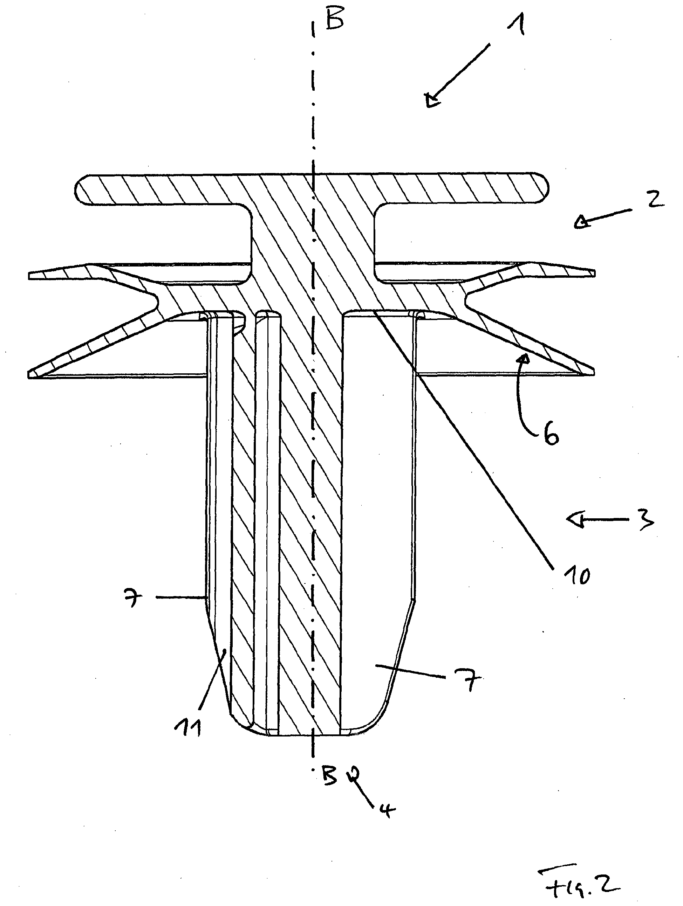

Aus US 7,967,539 B2 ist ein Clip mit einem Kopf und einem sich entlang einer Längsachse von dem Kopf erstreckenden Schaft bekannt, bei dem in der Darstellung der Fig. 2 sechs Rippen vorgesehen sind, wobei sich jede Rippe von einer Basis der jeweiligen Rippe am Schaft zu einem Ende der jeweiligen Rippe radial bei Abschnitt von der Basis der jeweiligen Rippe erstreckt. Der zum Kopf gehörige Kragen 43 ist über einen zylindrischen Schaft ("shank 48") mit dem die Rippen tragenden Teil des Schafts ("hub 4") verbunden (vgl. Fig. 11).

Aus JP 2014-20466 A ist ein Clip mit einem Kopf und einem sich entlang einer Längsachse von dem Kopf erstreckenden Schaft bekannt, bei dem drei Rippen vorgesehen sind. Jede Rippe erstreckt sich von einer Basis der jeweiligen Rippe am Schaft zu einem Ende der jeweiligen Rippe, das radial beabstandet von der Basis der jeweiligen Rippe angeordnet ist. Bei der JP 2014-20466 A sind alle Rippen unmittelbar mit dem Kopf verbunden. Jede Rippe weist einen elastischen Arm auf, der von der jeweiligen Rippe absteht.

Vor diesem Hintergrund lag der Erfindung die Aufgabe zugrunde, einen Clip vorzuschlagen, der leicht in eine Befestigungsöffnung eingeführt werden kann, ohne Rücksicht auf seine jeweilige Lage hinsichtlich einer Rotation um seine Längsachse sicher Haltekräfte entfalten kann und zudem leicht hergestellt werden kann.

Diese Aufgabe wird durch den Gegenstand des Anspruchs 1 gelöst. Vorteilhafte Ausführungsformen sind in den Unteransprüchen der hiernach folgenden Beschreibung wiedergegeben.

Der erfindungsgemäße Clip weist einen Kopf und einen sich entlang einer Längsachse von dem Kopf erstreckenden Schaft auf, bei dem zumindest zwei Rippen vorgesehen sind, wobei jede Rippe sich von einer Basis der jeweiligen Rippe am Schaft zu einem Ende der jeweiligen Rippe radial beabstandet von der Basis der jeweiligen Rippe erstreckt. Damit unterscheidet sich der Clip in seinem grundsätzlichen Aufbau von Clips, wie sie beispielsweise aus EP 2 404 067 B1 und WO 2012/104250 A1 bekannt sind. Clips wie die aus EP 2 404 067 B1 oder WO 2012/104250 A1 bekannten weisen in ihrem Schaftbereich zumindest an zwei Seiten des Schafts, häufig aber an allen vier Seiten eines rechteckig ausgeführten Schafts ebene Flächen auf. Diese ergeben sich dadurch, dass diese Art von Clips durch das Umbiegen von Metallstanzteilen hergestellt werden und somit mehrheitlich aus flächigen Bauabschnitten bestehen. Durch den erfindungsgemäße Grundaufbau mit mindestens 2 Rippen, die eine Basis an dem Schaft aufweisen und ein radial von der Basis beabstandetes Ende aufweisen, wird die Möglichkeit geschaffen, die in die Öffnung einzuführenden Abschnitte des Clips hinsichtlich ihrer räumlichen Anordnung freier zu gestalten.

Die Erfindung sieht vor, dass zumindest eine der Rippen einen elastischen Arm aufweist, der von der jeweiligen Rippe absteht. Dabei sieht die Erfindung vor, dass zumindest eine Rippe eine Seite aufweist, die sich zwischen der Basis der Rippe und dem Ende der Rippe erstreckt, wobei der elastische Arm dieser Rippe von dieser Seite der Rippe absteht. Dabei ist der elastische Arm derart ausgebildet, dass er zumindest zwei Abschnitte, einen ersten Abschnitt und einen zweiten Abschnitt aufweist. Der erste Abschnitt ist an einem Ende mit der Rippe verbunden und an seinem anderen Ende mit dem zweiten Abschnitt verbunden. Der zweite Abschnitt erstreckt sich in eine unterschiedliche Richtung als der erste Abschnitt.

Durch das Anordnen des elastischen Arms an einer Seite der Rippe kann der Vorteil realisiert werden, dass der Arm nicht am Ende der Rippe vorgesehen ist und dort in exponierter Lage beschädigt werden kann, beispielsweise überdehnt werden kann. Die Aufteilung des elastischen Arms in zwei Abschnitte, die sich in unterschiedliche Richtung erstrecken, bietet den Vorteil, dass der zweite Abschnitt als Klemmelement ausgeführt werden kann, das beim Durchführen des Schafts des Clips durch ein Loch nach dem Passieren des Lochs radial nach außen springt und durch Hintergreifen des Rands des Lochs ein Zurückziehen des Clips verhindert, während der erste Abschnitt dazu genutzt werden kann, die Brücke zwischen der Rippe und der gewünschten Positionierung des zweiten Abschnitts zu bilden. Das Vorsehen des ersten Abschnitts ermöglicht es beispielsweise, den zweiten Abschnitt in einer von der Rippe entfernten Lage zu halten und damit Raum für ein Einfedern des zweiten Abschnitts zu schaffen, wenn der Clip in das Loch eingeführt wird und der zweite Abschnitt für das Durchführen des Schafts durch das Loch einfedern muss. Zugleich erhält der Clip durch das Vorhandensein der Rippen jedoch einen stabilen Grundaufbau, der beispielsweise radialen Bewegungen des Clips in dem Loch entgegen wirken kann.

Dadurch, dass der zweite Abschnitt sich in eine unterschiedliche Richtung als der erste Abschnitt erstreckt wird es möglich, die Elastizität des Arms innerhalb seiner Erstreckung zu erhöhen. Es sind Ausführungsformen denkbar, bei denen der erste Arm steifer ausgebildet ist und der Übergang vom ersten Arm zum zweiten Arm als Art eines Gelenks, beispielsweise als Scharnier funktioniert und dadurch dem Arm eine Elastizität gibt innerhalb seiner Erstreckung gibt. Eine solche Ausführungsform mit erhöhter Elastizität im Übergang vom ersten Abschnitt zum zweiten Abschnitt kann dazu genutzt werden, Beschädigungen der Außenkante (einer äußeren Kante des zweiten Abschnitts; zu reduzieren oder zu vermeiden, so dass der Clip mehrfach verwendet werden kann. Das kann auch dazu beitragen, dass der Clip mehrfach entformt werden kann (mehrfach herausgenommen werden kann), ohne dass die Auzugskraft (die zum Entformen des Clips notwendige Kraft) reduziert wird, der Clip also trotz mehrfachem Entformen immer noch die selbe Sperrwirkung gegen ein Entformen entfaltet. Auch bietet sich dadurch die Möglichkeit, größere Haltekräfte zu realisieren, wobei zeitgleich der Arm elastisch verformbar bleibt.

Die Erfindung sieht ferner vor, dass zumindest eine der Rippen zumindest abschnittweise unmittelbar mit dem Kopf verbunden ist und auch der erste Abschnitt zumindest abschnittweise unmittelbar mit dem Kopf verbunden ist. Dadurch wird die Stabilität des Schafts sowie die Positionierungsgenauigkeit, mit der der erste Abschnitt den zweiten Abschnitt des elastischen Arms positioniert, erhöht. Ferner wird dadurch das Risiko reduziert, dass der elastische Arm an seiner Verbindung mit der Rippe beschädigt wird, beispielsweise abbricht. Indem sowohl die Rippe zumindest abschnittweise unmittelbar mit dem Kopf verbunden ist, als auch der erste Abschnitt zumindest abschnittweise unmittelbar mit dem Kopf verbunden ist, wird die Möglichkeit der Relativbewegung des ersten Abschnitts relativ zur Rippe zumindest in dem Bereich, in dem der erste Abschnitt mit der Rippe verbunden ist, reduziert und dadurch die Wahrscheinlichkeit einer Beschädigung, wie sie sonst bei Relativbewegungen zwischen dem ersten Abschnitt und der Rippe im Bereich der Verbindung zwischen dem ersten Abschnitt und der Rippe auftreten könnte, reduziert.

Unter einem "Clip" wird eine Befestigungsvorrichtung verstanden, die zumindest eine erste Kontaktfläche und zumindest eine zweite, der ersten Kontaktfläche zugewandte Kontaktfläche aufweist. Die erste Kontaktfläche ist in der Regel an einem feststehenden Element der Befestigungsvorrichtung vorgesehen, üblicherweise am Kopf des Clips, während die zweite Kontaktfläche auf einem federnden Element der Befestigungsvorrichtung vorgesehen ist, wie dem elastischen Arm. Derartige Befestigungsvorrichtungen sind dazu vorgesehen, mit einer Spitze in eine Ausnehmung, meist ein Loch, in einem ersten Element eingeführt zu werden. Dabei wird das die zweite Kontaktfläche tragende federnde Element während des Einschiebens eingedrückt, federt jedoch nach dem Passieren des Lochs wieder in seine Ausgangsstellung zurück. Das erste Element ist meist als flächiges Element, beispielsweise als Platte oder als Blech eines Teils eines Rahmens eines Fahrzeugs ausgebildet. Das erste Element kann jedoch auch ein Sackloch mit einer entsprechend gewählten Hinterschneidung aufweisen, die dem federnden Element das Ausfedern ermöglicht, nachdem es einen engeren Teil des Lochs oberhalb der Hinterschneidung passiert hat. Ein zweites Element kann durch Klemmung an dem ersten Element befestigt werden, beispielsweise wenn es zwischen einem Kopf des Clips und einer Oberfläche des ersten Elements geschoben wird und der Abstand der ersten Kontaktfläche, die dann am Kopf des Clips vorgesehen ist, und der zweiten Kontaktfläche des Clips so gewählt ist, dass sie bei einer bestimmten Materialstärke des ersten Elements und einer bestimmten Materialstärke des zweiten Elements eine solche Klemmung erzeugen kann. Ebenso ist es denkbar, dass das zweite Element ebenfalls ein Loch aufweist und der Clip mit seiner Spitze durch beide Löcher geführt wird. Ebenso ist es denkbar, dass das zweite Element an einem Kopf des Clips befestigt wird, wenn dieser beispielsweise einen Haken oder einen Befestigungspilz aufweist oder wenn das zweite Element schlichtweg mit dem Kopf des Clips verklebt, verschweißt oder in anderer Weise fügend verbunden wird.

Unter einem Kopf eines solchen Clips wird eine an einem Ende des Clips vorgesehene Verbreiterung verstanden. Der Kopf ist in der Regel dafür vorgesehen, um zu verhindern, dass der Clip gänzlich durch ein Loch des ersten Elements geschoben werden kann. Häufig ist der Kopf auch dafür ausgebildet, um die für das Einschieben des Clips in ein Loch des ersten Elements aufzubringende Kraft auf den Clip applizieren zu können. Hierzu weist der Clip häufig eine der Spitze abgewandte flache Oberfläche auf. In einer bevorzugten Ausführungsform ist der Kopf starr ausgebildet, wobei unter "starr" verstanden wird, dass kein Abschnitt des Kopfes relativ zu einem anderen Abschnitt des Kopfs beweglich, beispielsweise federnd ausgebildet ist. In einer alternativen Ausführungsform weist der Kopf einen starren Grundkörper auf, an dem zum Kopf zugehörige federnde Elemente, beispielsweise federnde Arme oder schirmartige Dichtlippen vorgesehen sind. In einer bevorzugten Ausführungsform ist die größte Querschnittsfläche aller Querschnittsflächen des Kopfs in Ebenen senkrecht zur Längsachse des Clips größer als die größte Querschnittsfläche aller Querschnittsflächen des Schafts in Ebenen senkrecht zur Längsachse des Clips.

Der Clip weist ferner vorzugsweise eine Spitze auf. Mit "Spitze" wird im Kontext dieser Beschreibung lediglich das dem Kopf gegenüberliegende Ende des Clips bezeichnet. Zwar ist es in einer bevorzugten Ausführungsform vorgesehen, dass ein sich von dem Kopf in Richtung auf die Spitze erstreckender Schaft des Clips zur Spitze hin verjüngt. Dies ist aber nicht zwingend notwendig. Als Spitze im Kontext dieser Beschreibung wird auch ein in einer denkbaren Ausführungsform vorzusehendes stumpfes Ende an dem dem Kopf gegenüberliegenden Ende eines Schafts verstanden. In einer bevorzugten Ausführungsform kann die Spitze pyramidenförmig oder kegelförmig oder pyramidenstumpfförmig oder kegelstumpfförmig zulaufen. Ebenso kann die Spitze durch den First eines dachförmigen Endabschnitts eines sich von dem Kopf zur Spitze hin erstreckenden Schafts ausgebildet werden. Dies ist aber nicht zwingend notwendig. Die Spitze kann durch einen einzigen Abschnitt des Clips gebildet werden.

Zwischen dem Kopf und der Spitze weist der Clip einen, ggf. aus mehreren Teilen zusammengesetzten Schaft auf. Der Clip weist eine Längsachse auf, die sich vom Kopf zur Spitze erstreckt. Insbesondere bevorzugt ist der Schaft in seiner vom Kopf zur Spitze weisenden Längserstreckung länger, als in einer senkrecht zur Längserstreckung weisenden Breitenrichtung. Insbesondere bevorzugt weist die Längsachse des Clips in Richtung der Längserstreckung des Schafts. Häufig wird in Beschreibungen von Clips der Begriff "Schaft" dazu verwendet, die Gesamtheit der Bauteile des Clips zu beschreiben, die zwischen dem Kopf und der Spitze des Clips vorgesehen sind. Für die Beschreibung der vorliegenden Erfindung soll unter dem Begriff "Schaft" der Teil der Gesamtheit der Bauteile des Clips, die zwischen dem Kopf und der Spitze des Clips vorgesehen sind, verstanden werden, die nicht von den Rippen gebildet werden. Insbesondere bevorzugt wird unter dem "Schaft" das mittig angeordnete Material, insbesondere bevorzugt das im Bereich der Längsachse angeordnete Material des Clips verstanden, von dem sich aus die Rippen erstrecken. Trennt man die Rippen (gedanklich) ab, so kann der Schaft beispielsweise die Form eines Stabs oder eines Rohrs haben, der, bzw. das vom Kopf bis zur Spitze verläuft.

In einer bevorzugten Ausführungsform ist der Clip bezüglich einer Ebene, die die Längsachse des Clips enthält, spiegelsymmetrisch ausgeführt. In einer alternativen Ausführungsform ist der Clip rotationssymmetrisch um die Längsachse ausgeführt, so dass jeder Abschnitt des Clips durch eine Drehung um einen Winkel um die Längsachse in Deckung mit einem identisch ausgebildeten Abschnitt des Clips gebracht werden kann. Der Winkel ist bei 2 Rippen insbesondere bevorzugt 180°, bei 3 Rippen insbesondere bevorzugt 120° und bei 4 Rippen insbesondere bevorzugt 90° und bei n-Rippen insbesondere bevorzugt 360°/n. Es sind jedoch auch Ausführungsformen denkbar, bei denen der Clip nicht spiegelsymmetrisch und/oder nicht rotationssymmetrisch ausgeführt ist. ausgeführt sind. Dies kann sich aus der Einbausituation ergeben, beispielsweise wenn der Clip dazu ausgestaltet ist, in ein nicht rotationssymmetrische Loch eingeführt zu werden oder wenn der Clip in ein Langloch eingeführt werden soll oder wenn durch das Ausführen der Rippe oder des Arms in voneinander unterschiedlicher Form besondere technische Effekte erzielt werden sollen, wie beispielsweise die Möglichkeit, den Clip durch leichtes Kippen leichter aus dem Loch ziehen zu können und für das Bereitstellen der Möglichkeit eines leichten Kippens eine der Rippen kürzer ausgeführt wird.

In einer bevorzugten Ausführungsform weist der Kopf eine Abschlussfläche auf, insbesondere bevorzugt eine ebene Abschlussfläche oder eine schirmartige Abschlussfläche, wobei der Schaft an seinem kopfseitigen Ende mit der Abschlussfläche verbunden ist und sich von der Abschlussfläche entlang der Längsachse forterstreckt, vorzugsweise in einem Winkel von 90°.

Die Querschnittsform des Schafts in Ebenen senkrecht zur Längsachs dreieckig, rechteckig, insbesondere bevorzugt quadratisch, polygone, rund oder elliptisch sein. In einer bevorzugten Ausführungsform ist die Querschnittsform über Längserstreckung des Schafts vorzugsweise gleichbleibend. Es sind Ausführungsformen denkbar, bei denen auch die Größe des Querschnitts des Schafts für seine Längserstreckung gleichbleibt. In einer bevorzugten Ausführungsform ist der Schaft hinsichtlich der Größe seines Querschnitts unter Beibehaltung der Querschnittsform jedoch auf die Spitze zulaufend ausgeführt. Der Verlauf der Querschnittsform oder Querschnittsgröße des Schafts über seine Längserstreckung in Ebenen senkrecht zur Längsachse lässt sich auch dadurch beschreiben, dass die Querschnittsform oder Querschnittsgröße in allen Ebenen senkrecht zur Längsachse betrachtet werden, die den Schaft schneiden. In einer bevorzugten Ausführungsform weist der Schaft zumindest in der Hälfte der senkrecht zur Längsachse stehenden Ebenen, insbesondere bevorzugt in 75 % der senkrecht zur Längsachse stehenden Ebenen einen bezüglich seiner geometrischen Form und insbesondere bevorzugt einen hinsichtlich seiner Größe gleichbleibenden Querschnitt auf. Der Schaft kann aus Vollmaterial sein, also in den genannten Querschnitten den Querschnitt gänzlich mit Material gefüllt haben. Ebenso ist es zur Materialersparnis denkbar, dass der Schaft eine co-axial mit der Längsachse ausgerichtete Ausnehmung oder Höhle aufweist, der Schaft also beispielsweise als Rohr ausgebildet ist. In einer bevorzugten Ausführungsform liegt der Mittelpunkt der vorgenannten Querschnitte auf der Längsachse.

Es ist erfindungsgemäß vorgesehen, dass jede Rippe eine Basis am Schaft aufweist. Damit ist gemeint, dass jede Rippe mit dem Schaft verbunden ist und sich von dem Schaft forterstreckt. Da die Rippen eine Materialdicke aufweisen, die aufgrund des Übergehens der Rippe in den Schaft das Ermitteln der Querschnittsform des Schafts erschweren könnte, wird im Zuge dieser Beschreibung als Querschnitt des Schafts in einer Ebene senkrecht zur Längsachse die geometrische Form verstanden, die sich ergibt, wenn die Rippen, entlang einer jeweiligen Trennebene, die parallel zur Längsachse verläuft, von dem Schaft getrennt werden.

Der erfindungsgemäße Clip weist zumindest zwei Rippen auf. In einer besonders bevorzugten Ausführungsform weist der Clip drei, insbesondere bevorzugt vier, insbesondere bevorzugt mehr als vier Rippen auf. Unter einer Rippe wird ein Teilelement des Clips verstanden, das sich von einer Basis am Schaft des Clips zu einem Ende erstreckt, das radial beabstandet von der Basis ist. Dabei wird die Beschreibung "radiale Beabstandung" so verstanden, dass sich das Ende der jeweiligen Rippe auf einem Kreis um die Längsachse befindet, dessen Radius größer ist, als ein Kreis, auf dem die Basis der jeweiligen Rippe liegt. Es ist zum Erzielen der Vorteile der Erfindung nicht notwendig, dass sich die Rippe radial erstreckt, auch wenn dies bevorzugt ist. Es sind auch Ausführungsformen denkbar, bei denen sich die Rippe ausgehend von der Basis in einem Winkel zur radial Richtung bis hin zum Ende der Rippe erstreckt.

Der Abstand zwischen der Basis der jeweiligen Rippe und dem Ende der jeweiligen Rippe kann in zwei Ebenen, die senkrecht zur Längsachse stehen und die jeweils die Rippe schneiden unterschiedlich sein. Das Ende der Rippe muss somit nicht durch eine Fläche oder Linie gebildet sein, die in einer Ebene senkrecht zur Längsachse liegt. So ist es beispielsweise denkbar, dass sich die Rippe zur Spitze hin verjüngt, was gleichbedeutend mit der Aussage ist, dass in den Querschnitten der Rippe, die senkrecht zur Längsachse stehen, bei den Querschnitten, die näher zur Spitze sind, der Abstand zwischen dem Ende der Rippe und der Basis der Rippe kleiner ist, als in Querschnitten, die weiter entfernt von der Spitze liegen.

In einer bevorzugten Ausführungsform ist der maximale Abstand, den das Ende einer Rippe zur Basis einer Rippe in einem der Querschnitt der Rippe, die senkrecht zur Längsachse stehen, größer als die Dicke der Rippe, wobei als Dicke der Rippe die Abmessung der Rippe verstanden wird, die sich in einer Ebene, die senkrecht zur Längsachse steht, senkrecht zu der Richtung erstreckt, die von der Basis der Rippe zum Ende der Rippe führt.

In einer bevorzugten Ausführungsform ist der maximale Abstand, den das Ende einer Rippe zur Basis einer Rippe in einem der Querschnitt der Rippe, die senkrecht zur Längsachse stehen, hat, näher zum Kopf, als zur Spitze angeordnet und insbesondere bevorzugt am Kopf angeordnet.

In einer bevorzugten Ausführungsform ist die Rippe plattenförmig ausgeführt, wobei unter plattenförmiger Ausführung insbesondere eine Bauform verstanden wird, die zwei in parallel zueinander angeordneten Ebenen verlaufende Seitenflächen aufweist. Insbesondere bevorzugt erstrecken sich die in parallelen Ebenen angeordneten Seitenflächen von der Basis der Rippe bis zum Ende der Rippe. Insbesondere bevorzugt weist die Rippe eine Mittelebene auf, die die Längsachse enthält, wobei die in parallelen Ebenen verlaufenden Seitenflächen den gleichen Abstand zur Mittelebene aufweisen. Eine plattenförmig ausgeführt Rippe kann aber auch so ausgeführt sein, dass sie zwei in Ebenen verlaufende Seitenflächen aufweist, wobei die Seitenflächen sich nicht schneiden und die Ebenen, in denen sie verlaufen in einem Winkel von <20°, insbesondere bevorzugt < 15°, insbesondere bevorzugt <10° und ganz besonders bevorzugt <5° zu einander stehen. Die Seitenflächen einer solchen Ausführungsform sind vorzugsweise als leicht nach außen zulaufend ausgeführt, so dass die Dicke der plattenförmigen Rippe an der Basis größer ist, als am äußeren Ende der Rippe. Dabei kann das Ende der Rippe durch den radial äußersten Abschnitt einer ebenen Fläche gebildet werden, die in einem Winkel, vorzugsweise in einem Winkel zwischen 45° und 135°, insbesondere bevorzugt in einem Winkel von 90° zu den in parallelen Ebenen verlaufenden Seitenflächen verläuft. Das Ende der Rippe kann auch durch den First eines dachförmigen Endabschnitts der Rippe gebildet werden, der am radial äußeren Ende an die Seitenflächen angrenzt. Das Ende der Rippe kann auch der Scheitel einer kreisbogenförmigen oder balligen Fläche sein, die am radial äußeren Ende an die Seitenflächen angrenzt.

Zumindest eine Rippe ist zumindest abschnittweise unmittelbar mit dem Kopf verbunden. Insbesondere bevorzugt ist die Rippe über Hälfte und insbesondere bevorzugt mehr als die Hälfte ihrer Erstreckung von der Basis bis zum Ende im Bereich des Kopfs unmittelbar mit dem Kopf verbunden. Insbesondere bevorzugt ist der an den Schaft angrenzende Abschnitt der Rippe im Bereich des Kopfs unmittelbar mit dem Kopf verbunden. Ganz besonders bevorzugt ist die Hälfte, insbesondere bevorzugt mehr als die Hälfte der vorhandenen Rippen zumindest abschnittweise unmittelbar mit dem Kopf verbunden. Insbesondere bevorzugt sind alle Rippen zumindest abschnittweise unmittelbar mit dem Kopf verbunden. Eine unmittelbare Verbindung der Rippe mit dem Kopf ergibt sich dadurch, dass die Rippe in dem betreffenden Abschnitt mit einem Teil des Kopfes, beispielsweise mit der Abschlussfläche des Kopfes verbunden ist. Das kann dadurch erfolgen, dass die Rippe in diesem Abschnitt an dem Kopf angeklebt wird oder im Wege des Schweißens oder mit einem anderen Fügeverfahren mit dem Kopf verbunden wird. Wird der Clip aus Vollmaterial herausgearbeitet, so kann eine unmittelbare Verbindung der Rippe mit dem Kopf dadurch erreicht werden, dass in dem Abschnitt, in dem die Rippe unmittelbar mit dem Kopf verbunden bleiben soll, kein Material abgetragen wird, bzw. ausgespart wird. Wird der Clip im Wege eines Gießverfahrens urgeformt, so kann die unmittelbare Verbindung der Rippe mit dem Kopf dadurch erreicht werden, dass in diesem Abschnitt kein Kern vorgesehen ist, der den Materialfluss verhindern würde. Eine Rippe ist dann nicht unmittelbar mit dem Kopf verbunden, wenn die Rippe, wie in der Fig. 11 der US 7,967,539 B2 nicht in Kontakt mit der Abschlussfläche des Kopfes steht, und der Schaft in diesem Bereich freistehend ausgeführt ist.

Die Erfindung sieht vor, dass zumindest eine Rippe einen elastischen Arm aufweist, der von der jeweiligen Rippe absteht. Unter einem elastischen Arm wird insbesondere ein Arm verstanden, der eine Kontaktfläche oder einen Kontaktpunkt aufweist, dessen Lage durch Applikation einer Kraft an diesem Kontaktpunkt oder an dieser Kontaktfläche von einer Vorzugslage, die dieser Kontaktpunkt oder diese Kontaktfläche ohne Anliegen einer Kraft einnimmt, in eine zweite Position bewegt werden kann, ohne dass dabei der elastische Arm zerstört wird. In einer bevorzugten Ausführungsform weist die Hälfte der vorhandenen Rippen einen elastischen Arm auf. Insbesondere bevorzugt weist mehr als die Hälfte der vorhandenen Rippen einen elastischen Arm auf. Ganz besonders bevorzugt weisen alle vorhandenen Rippen einen elastischen Arm auf.

Die Erfindung sieht vor, dass zumindest eine Rippe eine Seite aufweist, die sich zwischen der Basis der Rippe und dem Ende der Rippe erstreckt, wobei der elastische Arm dieser Rippe von dieser Seite der Rippe absteht. In einer bevorzugten Ausführungsform weist die Hälfte der vorhandenen Rippen eine Seite auf, die sich zwischen der Basis der Rippe und dem Ende der Rippe erstreckt, wobei der elastische Arm dieser Rippe von dieser Seite der Rippe absteht. Insbesondere bevorzugt weist mehr als die Hälfte der vorhandenen Rippen eine Seite aufweist, die sich zwischen der Basis der Rippe und dem Ende der Rippe erstreckt, wobei der elastische Arm dieser Rippe von dieser Seite der Rippe absteht. Ganz besonders bevorzugt weisen alle vorhandenen Rippen eine Seite aufweist, die sich zwischen der Basis der Rippe und dem Ende der Rippe erstreckt, wobei der elastische Arm dieser Rippe von dieser Seite der Rippe absteht. Als Seite der Rippe wird eine Oberfläche der Rippe, insbesondere bevorzugt eine ebene Oberfläche (eine in einer Ebene angeordnete Oberfläche) der Rippe verstanden, deren Flächennormale nicht in Richtung von der Basis der Rippe zum Ende der Rippe, beziehungsweise in eine Richtung parallel zu der Richtung, die von der Basis der Rippe zum Ende der Rippe weist, weist. In einer bevorzugten Ausführungsform ist die Seite der Rippe eine ebene Oberfläche, deren Flächennormale sich im Winkel von 90° zu der Richtung erstreckt, die von der Basis der Rippe zur Ebene der zum Ende der Rippe weist.

Die Erfindung sieht vor, dass zumindest ein elastischer Arm einen ersten Abschnitt und einen zweiten Abschnitt aufweist, wobei der erste Abschnitt an einem Ende mit der Rippe verbunden ist und an einem anderen Ende mit dem zweiten Abschnitt verbunden ist, wobei der zweite Abschnitt sich in eine unterschiedliche Richtung als der erste Abschnitt erstreckt. In einer bevorzugten Ausführungsform weist die Hälfte der vorhandenen elastischen Arme den vorstehend beschriebenen Aufbau aus einem ersten Abschnitt und einem zweiten Abschnitt auf, bei dem der erste Abschnitt an einem Ende mit der Rippe verbunden ist und an einem anderen Ende mit dem zweiten Abschnitt verbunden ist, wobei der zweite Abschnitt sich in eine unterschiedliche Richtung als der erste Abschnitt erstreckt. Insbesondere bevorzugt weist mehr als die Hälfte der vorhandenen elastischen Arme den vorstehend beschriebenen Aufbau aus einem ersten Abschnitt und einem zweiten Abschnitt auf, bei dem der erste Abschnitt an einem Ende mit der Rippe verbunden ist und an einem anderen Ende mit dem zweiten Abschnitt verbunden ist, wobei der zweite Abschnitt sich in eine unterschiedliche Richtung als der erste Abschnitt erstreckt. Ganz besonders bevorzugt weisen alle der vorhandenen elastischen Arme den vorstehend beschriebenen Aufbau aus einem ersten Abschnitt und einem zweiten Abschnitt auf, bei dem der erste Abschnitt an einem Ende mit der Rippe verbunden ist und an einem anderen Ende mit dem zweiten Abschnitt verbunden ist, wobei der zweite Abschnitt sich in eine unterschiedliche Richtung als der erste Abschnitt erstreckt.

In einer bevorzugten Ausführungsform ist der erste Abschnitt ein plattenförmiges Element, wobei unter plattenförmiger Ausführung insbesondere eine Bauform verstanden wird, die zwei in parallel zueinander angeordneten Ebenen verlaufende Seitenflächen aufweist. Insbesondere bevorzugt erstrecken sich die in parallelen Ebenen angeordneten Seitenflächen von der Verbindung des ersten Abschnitt des elastischen Arms mit der Rippe bis zum Übergang des ersten Abschnitts in den zweiten Abschnitt. Insbesondere bevorzugt weist der erste Abschnitt eine Mittelebene auf, wobei die in parallelen Ebenen verlaufenden Seitenflächen den gleichen Abstand zur Mittelebene aufweisen. In einer bevorzugten Ausführungsform verläuft die Mittelebene parallel zur Längsachse. In einer bevorzugten Ausführungsform, verläuft die Mittelebene des ersten Abschnitts eines elastischen Arms einer Rippe parallel zu der Mittelebene einer plattenförmig ausgeführten benachbarten Rippe. Ein plattenförmig ausgeführter erster Abschnitt kann aber auch so ausgeführt sein, dass er zwei in Ebenen verlaufende Seitenflächen aufweist, wobei die Seitenflächen sich nicht schneiden und die Ebenen, in denen sie verlaufen in einem Winkel von <20°, insbesondere bevorzugt < 15°, insbesondere bevorzugt <10° und ganz besonders bevorzugt <5° zu einander stehen. Die Seitenflächen einer solchen Ausführungsform sind vorzugsweise als leicht nach außen zulaufend ausgeführt, so dass die Dicke des ersten Abschnitts an der Verbindung mit der Rippe größer ist, als am Übergang des ersten Abschnitts in den zweiten Abschnitt. Bei einer Ausführungsform mit Mittelebene wird als Richtung, in die sich der erste Abschnitt erstreckt, die Richtung verstanden, die in der Mittelebene liegt und in einer Ebene senkrecht zur Längsachse des Schafts verläuft. In einer bevorzugten Ausführungsform erstreckt sich der erste Abschnitt in einem Winkel von größer 45° zu der Oberfläche der Seite, von der der elastische Arm absteht. In einer bevorzugten Ausführungsform erstreckt sich der erste Abschnitt in einem Winkel zwischen 45° und 90°, einschließlich von 45° und 90° zu der Oberfläche der Seite, von der der elastische Arm absteht. In einer bevorzugten Ausführungsform erstreckt sich der erste Abschnitt in einem Winkel zwischen 45° und 90°, einschließlich von 45°, aber ausschließlich von 90° zu der Oberfläche der Seite, von der der elastische Arm absteht. Der Winkel beeinflusst in Kombination mit der Stelle, an der der erste Abschnitt in Radialerstreckung der Rippe gesehen an der Rippe angeordnet ist, die Lage des Übergangs vom ersten Abschnitt zum zweiten Abschnitt. Um ein gute Einfedern des zweiten Abschnitts zu ermöglichen, empfiehlt es sich, den eingeschlossenen Winkel zwischen dem ersten Abschnitt und der Rippe umso kleiner zu wählen, je weiter die Stelle, an der der erste Abschnitt in Radialerstreckung der Rippe gesehen an der Rippe angeordnet ist, von der Basis der Rippe entfernt ist.

In einer bevorzugten Ausführungsform ist die Stelle, an der der erste Abschnitt in Radialerstreckung der Rippe gesehen an der Rippe angeordnet ist, über 30%, vorzugsweise über 50% der Erstreckung der Rippe von der Basis bis zu ihrem radial äußeren Ende von der Basis entfernt. Insbesondere bevorzugt ist die Stelle, an der der erste Abschnitt in Radialerstreckung der Rippe gesehen im letzten Drittel der Rippe vor ihrem radial äußere Ende angeordnet.

In einer bevorzugten Ausführungsform ist der zweite Abschnitt ein plattenförmiges Element, wobei unter plattenförmiger Ausführung insbesondere eine Bauform verstanden wird, die zwei in parallel zueinander angeordneten Ebenen verlaufende Seitenflächen aufweist. Insbesondere bevorzugt erstrecken sich die in parallelen Ebenen angeordneten Seitenflächen von der Verbindung des zweiten Abschnitt des elastischen Arms mit dem ersten Abschnitt fort zu einem freien Ende des zweiten Abschnitts. Insbesondere bevorzugt weist der zweite Abschnitt eine Mittelebene auf, wobei die in parallelen Ebenen verlaufenden Seitenflächen den gleichen Abstand zur Mittelebene aufweisen. In einer bevorzugten Ausführungsform verläuft die Mittelebene in einem Winkel zur Längsachse, vorzugsweise in einem Winkel von <45°, insbesondere bevorzugt von <20° und ganz besonders bevorzugt von <10°. Ein plattenförmig ausgeführter zweiter Abschnitt kann aber auch so ausgeführt sein, dass er zwei in Ebenen verlaufende Seitenflächen aufweist, wobei die Seitenflächen sich nicht schneiden und die Ebenen, in denen sie verlaufen in einem Winkel von <20°, insbesondere bevorzugt < 15°, insbesondere bevorzugt <10° und ganz besonders bevorzugt <5° zu einander stehen. Die Seitenflächen einer solchen Ausführungsform sind vorzugsweise als leicht nach außen zulaufend ausgeführt, so dass die Dicke des zweiten Abschnitts an der Verbindung mit dem ersten Abschnitt größer ist, als am freien Ende des zweiten Abschnitts. Bei einer Ausführungsform mit Mittelebene wird als Richtung, in die sich der zweite Abschnitt erstreckt, die Richtung verstanden, die in der Mittelebene liegt und in einer Ebene senkrecht zur Längsachse des Schafts verläuft.

Es sind jedoch auch Ausführungsformen denkbar, bei denen der zweite Abschnitt nicht plattenförmig ausgeführt ist, sondern beispielsweise bauchige Abschnitte aufweist. In einer solchen Ausführungsform wird als Richtung, in die sich der 2. Abschnitt erstreckt in Kombination mit einem plattenförmigen ersten Abschnitt die Richtung verstanden, bei der sich der elastische Arm nicht mehr in die Richtung erstreckt, die in der Mittelebene liegt und in einer Ebene senkrecht zur Längsachse des Schafts verläuft. Bei plattenförmig ausgeführtem ersten Abschnitt beginnt der zweite Abschnitt demnach insbesondere dort, wo sich der erste Abschnitt nicht mehr in die Richtung erstreckt, die in der Mittelebene liegt und in einer Ebene senkrecht zur Längsachse des Schafts verläuft.

Die Erfindung sieht vor, dass der zweite Abschnitt sich in eine unterschiedliche Richtung als der erste Abschnitt erstreckt. In einer bevorzugten Ausführungsform erstreckt sich der zweite Abschnitt in eine entgegengesetzte Richtung, so dass zwischen dem ersten Abschnitt und dem zweiten Abschnitt eine Winkel von <90°, insbesondere bevorzugt von <75°, insbesondere von kleiner 60° eingeschlossen wird, beispielsweise ein Winkel von 45°.

Die Erfindung sieht vor, dass der erste Abschnitt an seinem anderen Ende mit dem zweiten Abschnitt verbunden ist. Insbesondere bevorzugt ist diese Verbindung eine elastische Verbindung, die eine zerstörungsfreie Lageänderung des zweiten Abschnitts relativ zum ersten Abschnitt erlaubt, wenn äußere Kräfte auf den zweiten Abschnitt einwirken.

Die Erfindung sieht vor, dass der erste Abschnitt zumindest abschnittsweise unmittelbar mit dem Kopf verbunden ist. Insbesondere bevorzugt ist der erste Abschnitt über die Hälfte und insbesondere bevorzugt über mehr als die Hälfte seiner Erstreckung von der Verbindung mit der Rippe bis zum Übergang zum zweiten Abschnitt im Bereich des Kopfs mit dem Kopf verbunden. Insbesondere bevorzugt ist der erste Abschnitt über weniger als die Hälfte seiner Erstreckung von der Verbindung mit der Rippe bis zum Übergang zum zweiten Abschnitt im Bereich des Kopfs mit dem Kopf verbunden und besonders bevorzugt über weniger als 30%, ganz besonders bevorzugt über weniger als 15% und insbesondere bevorzugt über weniger als 10% seiner Erstreckung von der Verbindung mit der Rippe bis zum Übergang zum zweiten Abschnitt im Bereich des Kopfs mit dem Kopf verbunden, dabei aber insbesondere bevorzugt zugleich über mehr als 5% seiner Erstreckung von der Verbindung mit der Rippe bis zum Übergang zum zweiten Abschnitt im Bereich des Kopfs mit dem Kopf verbunden. Insbesondere bevorzugt ist der an die Rippe angrenzende Abschnitt des ersten Abschnitts im Bereich des Kopfs unmittelbar mit dem Kopf verbunden. Ganz besonders bevorzugt ist bei der Hälfte, insbesondere bevorzugt mehr als der Hälfte der vorhandenen elastischen Arme der ersten Abschnitte zumindest abschnittweise unmittelbar mit dem Kopf verbunden. Insbesondere bevorzugt ist bei allen elastischen Armen der erste Abschnitt zumindest abschnittweise unmittelbar mit dem Kopf verbunden. Eine unmittelbare Verbindung des ersten Abschnitts mit dem Kopf ergibt sich dadurch, dass der erste Abschnitt in dem betreffenden Abschnitt mit einem Teil des Kopfes, beispielsweise mit der Abschlussfläche des Kopfes verbunden ist. Das kann dadurch erfolgen, dass der erste Abschnitt in diesem Abschnitt an dem Kopf angeklebt wird oder im Wege des Schweißens oder mit einem anderen Fügeverfahren mit dem Kopf verbunden wird. Wird der Clip aus Vollmaterial herausgearbeitet, so kann eine unmittelbare Verbindung des ersten Abschnitts mit dem Kopf dadurch erreicht werden, dass in dem Abschnitt, in dem der erste Abschnitt unmittelbar mit dem Kopf verbunden bleiben soll, kein Material abgetragen wird, bzw. ausgespart wird. Wird der Clip im Wege eines Gießverfahrens urgeformt, so kann die unmittelbare Verbindung des ersten Abschnitts mit dem Kopf dadurch erreicht werden, dass in diesem Abschnitt kein Kern vorgesehen ist, der den Materialfluss verhindern würde.

In einer bevorzugten Ausführungsform ist eine Rippe mit einem elastischen Arm über den Teil ihrer Erstreckung von der Basis bis zum Abzweigen des elastischen Arms Ende im Bereich des Kopfs unmittelbar mit dem Kopf verbunden.

In einer bevorzugten Ausführungsform ist die maximale radiale Erstreckung einer ersten Rippe zwischen der Basis der ersten Rippe und dem Ende der ersten Rippe unterschiedlich zu der maximalen radialen Erstreckung einer zweiten Rippe zwischen der Basis der zweiten Rippe und dem Ende der zweiten Rippe. Es sind somit Ausführungsformen denkbar, bei denen eine Rippe kürzer ist, als die andere Rippe, beziehungsweise als die anderen Rippen. Eine solche Ausführungsform kann Vorteile für den Fall bieten, dass der Clip aus dem Loch gezogen werden soll. Wird eine der Rippen kürzer ausgeführt, so ist es denkbar, dass der Clip hinsichtlich der Ausrichtung seiner Längsachse in Bezug auf das Loch so gekippt werden kann, dass die kürzere Rippe einfacher in den Bereich des Loches gelangt und somit ein Herausziehen des Clips einfacher begonnen werden kann. In einer bevorzugten Ausführungsform der Erfindung sind zumindest drei Rippen vorgesehen, wobei für alle bis auf eine Rippe der maximale radiale Abstand zwischen der Basis der jeweiligen Rippe und dem Ende der jeweiligen Rippe der gleiche ist, während für eine Rippe der maximale Abstand zwischen der Basis der Rippe und dem Ende der Rippe unterschiedlich zu dem maximalen radialen Abstand zwischen der Basis und der anderen Rippe und den jeweiligen Enden der anderen Rippen ist.

In einer bevorzugten Ausführungsform sind die Rippen des Clips steif ausgeführt. Darunter wird verstanden, dass die Lage der Rippe durch Krafteinwendung nur unter partieller Zerstörung der Rippe geändert werden kann. Sind die Rippen steif ausgeführt, hat dies Vorteile für die Festlegung der Lage des Clips in dem Loch. Die Enden der Rippen definieren eine Umhüllende. Ist das Loch, in den der Schaft des Clips mit den Rippen eingeführt wird, genauso groß oder nur geringfügig größer als diese Umhüllende, so ist die Lage des Schafts des Clips in dem Loch festgelegt. Der Clip kann in dem Loch nicht schwimmen und hat - je nach Übermaß des Lochs relativ zu der durch die Enden der Rippen gebildeten Umhüllenden - nur geringfügiges Spiel.

In einer bevorzugten Ausführungsform ist vorgesehen, dass die Länge zumindest einer Rippe in eine Richtung parallel zur Längsachse des Schafts die gleiche ist, wie die Erstreckung des Schafts in Richtung der Längsachse. Insbesondere bevorzugt ist bei der Hälfte der vorhandenen Rippen die Länge in eine Richtung parallel zur Längsachse des Schafts die gleiche ist, wie die Erstreckung des Schafts in Richtung der Längsachse. Insbesondere bevorzugt ist bei mehr als der Hälfte der vorhandenen Rippen die Länge in eine Richtung parallel zur Längsachse des Schafts die gleiche ist, wie die Erstreckung des Schafts in Richtung der Längsachse. Insbesondere bevorzugt ist bei allen vorhandenen Rippen die Länge in eine Richtung parallel zur Längsachse des Schafts die gleiche ist, wie die Erstreckung des Schafts in Richtung der Längsachse. In einer bevorzugten Ausführungsform sind damit keine frei stehenden Abschnitte des Schafts vorgesehen. Die Rippen, die die gleiche Erstreckung in eine Richtung parallel zur Längsachse des Schafts haben, wie die Erstreckung des Schafts in Längsrichtung, müssen die Rippen über die Erstreckung der Rippe gesehen nicht den gleichen Abstand zwischen der Basis und dem Ende der Rippe haben. In einer bevorzugten Ausführungsform verjüngt sich zumindest eine Rippe in Richtung auf das Ende des Schafts hin. Dadurch kann die Bildung einer Spitze am Ende des Schafts unterstützt werden und das Einführen des Schafts in ein Loch vereinfacht werden. Insbesondere bevorzugt ist bei der Hälfte der vorhandenen Rippen die Länge in eine Richtung parallel zur Längsachse des Schafts die gleiche ist, wie die Erstreckung des Schafts in Richtung der Längsachse. Insbesondere bevorzugt verjüngt sich die Hälfte der vorhandenen Rippen in Richtung auf das Ende des Schafts hin. Insbesondere bevorzugt verjüngt sich mehr als die Hälfte der vorhandenen Rippen in Richtung auf das Ende des Schafts hin. Insbesondere bevorzugt verjüngen sich alle der vorhandenen Rippen in Richtung auf das Ende des Schafts hin.

In einer bevorzugten Ausführungsform ist es vorgesehen, dass der elastische Arm nicht die gleiche (maximale) Erstreckung in einer Richtung parallel zur Längsachse aufweist, wie die Rippe. In der Mehrzahl der Anwendungsfälle des erfindungsgemäßen Clips wird der elastische Arm dazu verwendet, die zweite Kontaktfläche bereitzustellen, die der ersten, meist am Kopf vorgesehenen Kontaktfläche zugewandt ist. Damit ist für die Auslegung des elastischen Arms vor allem der Bereich des elastischen Arms wesentlich, der sich näher zum Kopf als zur Spitze befindet. Deshalb sind Ausführungsformen denkbar, bei denen Material dadurch eingespart wird, dass der elastische Arm in eine Richtung parallel zur Längsrichtung des Schafts nicht so lange ausgeführt wird, wie die Rippe, von der er absteht. In einer bevorzugten Ausführungsform ist die maximal Länge des ersten Abschnitts des elastischen Arms in einer Richtung parallel zur Längsachse des Schafts an dem Ende des ersten Abschnitts, der mit der Rippe verbunden ist, kleiner als die maximale Länge der Rippe in eine Richtung parallel zur Längsachse. In einer bevorzugten Ausführungsform ist die Länge des ersten Abschnitts des elastischen Arms in einer Richtung parallel zur Längsachse des Schafts an dem Ende des ersten Abschnitts, der mit der Rippe verbunden ist, kleiner als 90%, insbesondere bevorzugt kleiner als 80% der Länge der Rippe in eine Richtung parallel zur Längsachse.

In einer bevorzugten Ausführungsform ist die Erstreckung des zweiten Abschnitts des elastischen Arms in der Richtung parallel zur Längsachse an dem Teil, der mit dem ersten Abschnitt verbunden ist, kleiner als in einem Teil des zweiten Abschnitts, der sich weiter entlang der Erstreckung des zweiten Teils vom ersten Teil fortbefindet. Es sind also Ausführungsformen denkbar, bei denen die Verbindung zwischen dem zweiten Abschnitt und dem ersten Abschnitt des elastischen Arms eine Einschnürung darstellt und sich der zweite Abschnitt des elastischen Arms hinsichtlich seiner Erstreckung in einer Richtung parallel zur Längsachse des Schafts ausgehend von dieser Einschnürung aufweitet. Das Vorsehen einer Einschnürung zwischen dem ersten Abschnitt und dem zweiten Abschnitt kann die Flexibilität erhöhen. So kann der erste Abschnitt in diesen Bauformen etwas steifer ausgeführt werden und durch das vorsehen einer Einschnürung die Beweglichkeit des zweiten Abschnitts relativ zum ersten Abschnitt erhöht werden.

In der bevorzugten Ausführungsform weist der zweite Abschnitt einen ausbauchenden Teil auf, der nach außen ausbauchend ausgebildet ist. Dieser ausbauchende Teil kann insbesondere bevorzugt eine zweiten Kontaktfläche bilden, die dazu vorgesehen ist, in Kontakt mit dem Material zu kommen, dass ein Loch umgibt, durch das der Schaft geführt ist. Beim Einführen des Schafts in das Loch wird der ausbauchende Teil aus einer Vorzugslage nach innen (in Richtung auf den Schaft zu) eingefedert, wobei der ausbauchende Teil sobald er das Loch passiert hat, wieder nach außen ausfedert und in dieser Stellung ein Zurückziehen des Schafts verhindert.

In einer bevorzugten Ausführungsform hat der ausbauchende Teil eine Kante, die den Übergang einer Umfangsfläche des ausbauchenden Teils zu einer dem Kopf zugewandten Fläche des zweiten Abschnitts darstellt. Im eingebauten Zustand hintergreift der ausbauchende Teil das Material, das das Loch umgibt, wobei in dieser bevorzugten Ausführungsform ein Abschnitt der dem Kopf zugewandten Fläche mit dem Material in Kontakt kommen kann.

In der bevorzugten Ausführungsform ist der Clip einstückig ausgeführt. In einer bevorzugten Ausführungsform ist der Clip aus einem Kunststoff hergestellt. Insbesondere bevorzugt wird der Clip im Wege des Spritzgussverfahrens hergestellt. Der erfindungsgemäße Clip wird insbesondere bevorzugt zum Befestigen eines Elements (dem zweiten Element) an einem Karosserieteil (dem erstes Element) eines Fahrzeugs, insbesondere bevorzugt an Rahmen eines Fahrzeugs verwendet. Insbesondere bevorzugt wird der Clip zum Befestigen eines Paneels (zweites Element) an dem Rahmen eines Fahrzeugs (erstes Element) verwendet. Besonders bevorzugt wird der Clip zum Befestigen eines Airbags an einem Karosserieteil, insbesondere bevorzugt eines Rahmens eines Fahrzeugs verwendet.

Eine erfindungsgemäße Vorrichtung weist ein erstes Element und ein an dem ersten Element befestigtes zweites Element auf, wobei das erste Element ein Loch aufweist und das zweite Element mittels eines erfindungsgemäßen Clips an dem ersten Element befestigt ist, wobei der Clips das Loch derart durchgreift, dass der Kopf des Clips auf einer Seite des ersten Elements und die Spitze des Clips auf der gegenüberliegenden Seite des Elements angeordnet ist. In einer bevorzugten Ausführungsform durchgreift der Clips das Loch derart, dass der Kopf des Clips auf einer Seite des ersten Elements und eine Kontaktfläche am Schaft des Clips auf der gegenüberliegenden Seite des Elements angeordnet ist. In einer bevorzugten Ausführungsform ist das erste Element ein Karosserieteil eines Fahrzeugs, vorzugsweise ein Rahmen eines Fahrzeugs. In einer bevorzugten Ausführungsform ist das zweite Element ein Paneel oder ein Airbag.

Nachfolgend wird die Erfindung anhand einer lediglich ein Ausführungsbeispiel darstellenden Zeichnung näher erläutert. Darin zeigen
- Fig. 1: einen erfindungsgemäßen Clip in einer Seitenansicht,
- Fig. 2: eine geschnittene Seitenansicht des in Fig. 1 dargestellten erfindungsgemäßen Clips entlang der Linie A - A in der Figur 1,
- Fig. 3: eine Ansicht des erfindungsgemäßen Clips von unten,
- Fig. 4: eine geschnittene Ansicht des Clips gemäß den Fig. 1 bis 3 in einem Horizontalschnitt zu der Darstellung gemäß Fig. 1, wobei die Schnittebene knapp unterhalb des Übergangs von der Abschlussfläche in die Rippe gewählt wurde,
- Fig. 5: eine perspektivische Ansicht des Clips gemäß Fig. 1 in einer Perspektive von schräg unten,
- Fig. 6: die Ansicht der Fig. 1 mit eingezeichneten Schnittebenen C, D, E und F,
- Fig. 7: eine geschnittene Ansicht des Clips gemäß den Fig. 1 bis 3 in einem Horizontalschnitt in der Schnittebene C gemäß Fig. 6
- Fig. 8: eine geschnittene Ansicht des Clips gemäß den Fig. 1 bis 3 in einem Horizontalschnitt in der Schnittebene D gemäß Fig. 6
- Fig. 9: eine geschnittene Ansicht des Clips gemäß den Fig. 1 bis 3 in einem Horizontalschnitt in der Schnittebene E gemäß Fig. 6 und
- Fig. 10: eine geschnittene Ansicht des Clips gemäß den Fig. 1 bis 3 in einem Horizontalschnitt in der Schnittebene F gemäß Fig. 6.

Der erfindungsgemäße Clip 1 weist einen Kopf 2 und einen sich entlang einer Längsachse B von dem Kopf erstreckenden Schaft 3 auf. Am Ende des Schafts ist eine Spitze 4 des Clips 1 ausgebildet. Der Kopf 2 des Clips 1 ist die am oberen Ende des Clips 1 vorgesehene Verbreiterung die unter anderem den schirmartig ausgeführten Abschnitt 5 weist. Die dem Schaft 3 zugewandte Oberfläche des schirmartigen Überstands 5 bildet die schirmartige ausgeführte Abschlussfläche 6 des Kopfes 2 aus. Der Schaft 3 ist mit dem horizontal verlaufenden Teil dieser Abschlussfläche 6 verbunden.

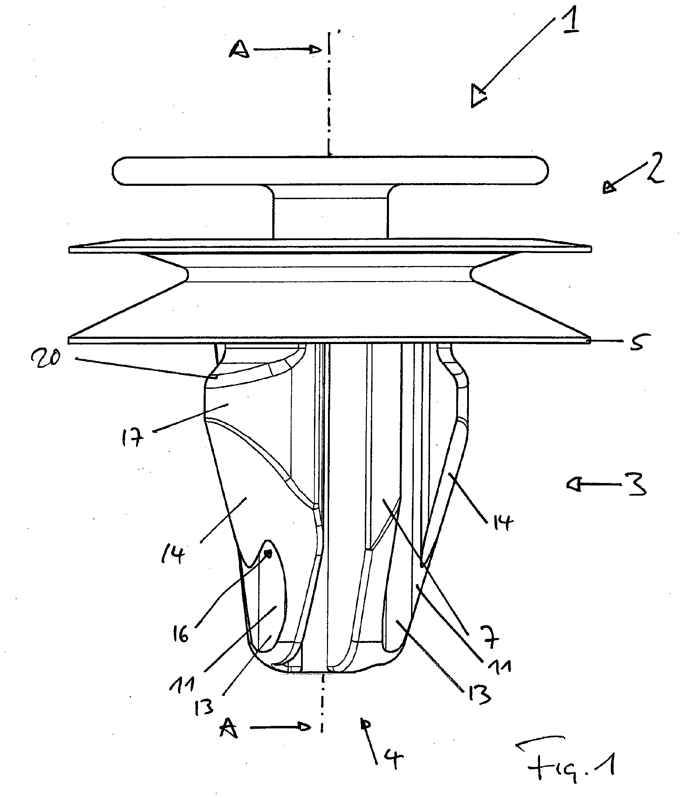

In den in den Fig. 1 bis Fig. 3 dargestellten Ausführungsform weist der Clip 1 drei Rippen 7 auf. Jede Rippe 7 erstreckt sich von einer Basis 8 der jeweiligen Rippe am Schaft 3 zu einem Ende 9 der jeweiligen Rippe 7. Das Ende 9 der jeweiligen Rippe 7 ist radial beabstandet von der Basis 8 der jeweiligen Rippe 7 angeordnet.

Wie insbesondere der Fig. 2 entnommen werden kann, ist jede der Rippen 7 unmittelbar mit dem Kopf verbunden und zwar in der in den Figuren dargestellten Ausführungsform über die gesamte radiale Erstreckung der Rippe 7 am Kopf. Dazu wird das Material der Rippe 7 in einer zwischen der Rippe 7 und dem horizontalen Teil der Abschlussfläche 6 gebildeten Kante 10 unmittelbar in den horizontalen Teil der Abschlussfläche 6 über.

In der in den Figuren dargestellten Ausführungsform weist jede Rippe 7 einen elastischen Arm 11 auf, der von der jeweiligen Rippe 7 absteht. In der in den Figuren dargestellten Ausführungsform weist jede Rippe 7 eine Seite 12 auf, die sich zwischen der Basis 8 der Rippe 7 und dem Ende 9 der Rippe 7 erstreckt. Der elastische Arm 11 dieser Rippe 7 steht von dieser Seite 12 der Rippe 7 ab.

In der in den Figuren dargestellten Ausführungsform weist jeder elastische Arm einen ersten Abschnitt 13 und einen zweiten Abschnitt 14 auf. Der erste Abschnitt 13 ist an einem Ende mit der Rippe 7 verbunden. An seinem anderen Ende ist der erste Abschnitt 13 mit dem zweiten Abschnitt 14 verbunden, wobei sich der zweite Abschnitt 14 in eine unterschiedliche Richtung als der Abschnitt 13 erstreckt.

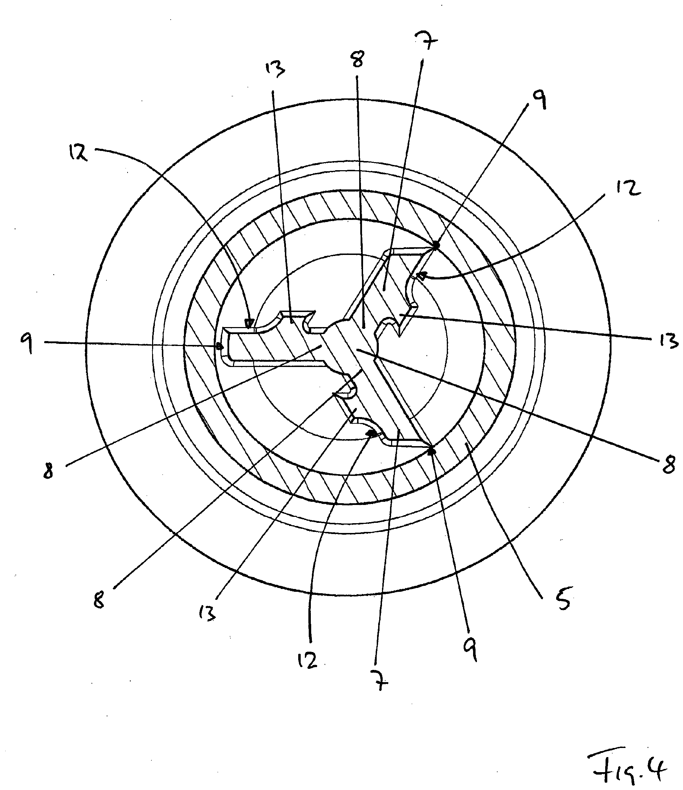

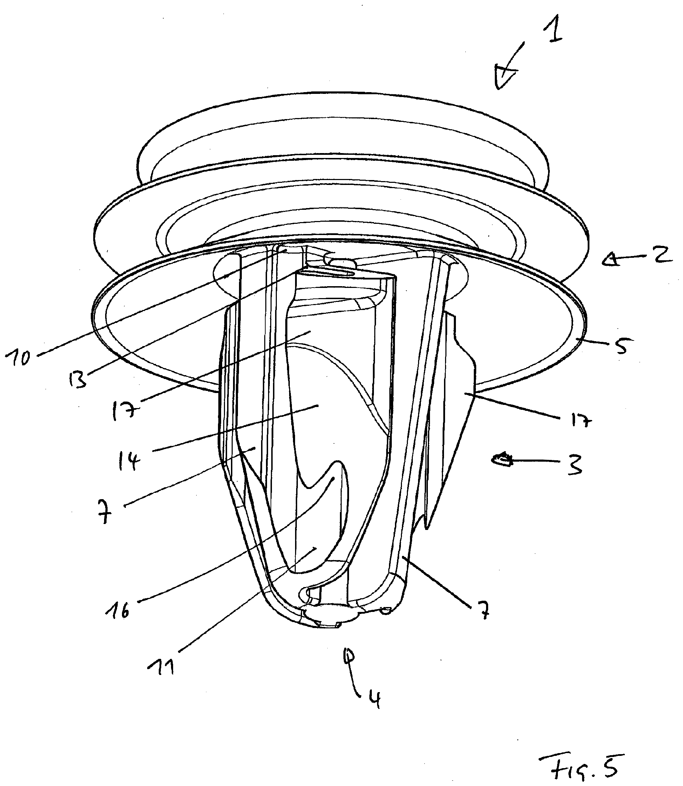

Der erste Abschnitt 14 ist zumindest abschnittweise unmittelbar mit dem Kopf 2 verbunden. Die Fig. 4 und 5 zeigen besonders deutlich, dass der erste Abschnitt 14 über weniger als 30%, nämlich ca. 15% seiner Erstreckung von der Verbindung mit der Rippe 7 bis zum Übergang zum zweiten Abschnitt im Bereich des Kopfs 2 mit dem Kopf 2 verbunden und dabei aber zugleich über mehr als 5%, nämlich über ca. 15% seiner Erstreckung von der Verbindung mit der Rippe 7 bis zum Übergang zum zweiten Abschnitt im Bereich des Kopfs 2 mit dem Kopf 2 verbunden ist.

In der Ansicht der Figur 2 ist zu erkennen, dass die Rippen 7 über den größeren Teil ihrer Längserstreckung in die Richtung parallel zur Längsachse B einen gleich bleibenden Abstand zwischen der Basis 8 der jeweiligen Rippe 7 und dem Ende 9 der jeweiligen Rippe 7 in Ebenen senkrecht zur Längsachse B aufweisen. Anders ausgedrückt: Die Endfläche 15 der Rippe verläuft über den größeren Teil der Längserstreckung der Rippe 7 in vertikaler Richtung. Lediglich in Richtung auf die Spitze 4 verringert sich der Abstand zwischen der Basis 8 und dem Ende 9 der Rippe 7. Die Rippe 7 verjüngt sich in Richtung auf das Ende des Schafts 3 hin.

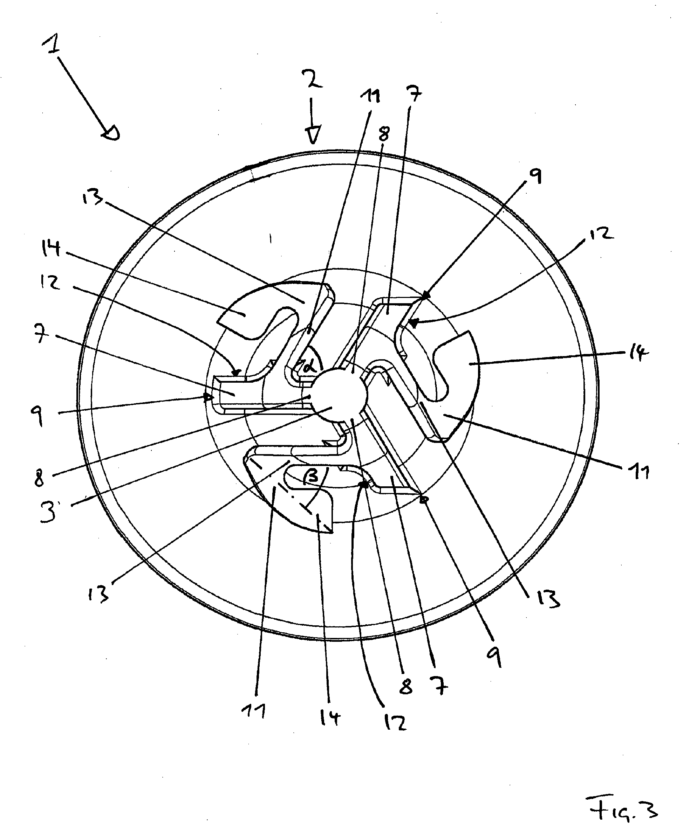

Die Fig. 3 zeigt unter Einsatz von zwei Kreisen, deren Mittelpunkt der Mittelpunkt des Schafts 3 ist, dass für alle bis auf eine der Rippen 7 der maximale radiale Abstand zwischen der Basis 8 der jeweiligen Rippe 7 und dem Ende 9 der jeweiligen Rippe 7 der gleiche ist, während für eine Rippe, nämlich die in der Ansicht der Fig. 3 etwa in der Neun Uhr Position befindlichen Rippe der maximale Abstand zwischen der Basis 8 der Rippe 7 und dem Ende 9 der Rippe 7 unterschiedlich zu dem maximalen Abstand zwischen der Basis 8 der anderen Rippen 7 und den jeweiligen Enden 9 der anderen Rippen 7 ist. Der maximale Abstand der einen Rippe ist kleiner als der maximale Abstand der anderen Rippen. Die unterschiedlichen Enden 9 der Rippen ermöglichen es, eine bevorzugte Entformungsrichtung zu definieren. Es ist davon auszugehen, dass bei scharfen Rändern des Lochs, in dem der Clip eingesetzt wird, die radial nach außen gerichteten Enden der Rippen beim schrägen Herausziehen des Clips jedes Mal abgeschabt werden. Sollte über die flache Seite der Rippe der Clip herausgezogen werden, so werden die spitzen Enden der anderen zwei Rippen abgeschabt. Aber aufgrund der Form ist die Materialabtragungsmenge sehr gering.

Die Fig. 3 zeigt ferner, dass der erste Abschnitt 13 des jeweiligen elastischen Arms 11 plattenförmig ausgeführt ist und dass die Seite 12 der Rippe 7, von der der erste Abschnitt 13 absteht, eben ausgebildet ist, wobei der erste Abschnitt 13 nicht rechtwinklig zur Seite 12 der Rippe 7 steht, sondern in einem Winkel Alpha von ca. 60°.

Insbesondere die Ansicht der Fig. 1 lässt erkennen, dass die Länge des ersten Abschnitts 13 des elastischen Arms 11 in eine Richtung parallel zur Längsachse B an dem Ende des ersten Abschnitts 13, der mit der Rippe 7 verbunden ist, in etwa gleich lang wie die Länge der Rippe 7 in einer Richtung parallel zur Längsachse B ist. Der erste Abschnitt 13 weist im Bereich der Spitze 4 eine kleine Abrundung 15 auf. Zugleich ist in der Fig. 1 gut zu erkennen, dass die Erstreckung des zweiten Abschnitts 14 des elastischen Arms 11 in einer Richtung parallel zur Längsachse B kleiner ist, als die Länge der Rippe 7 in eine Richtung parallel zur Längsachse B. Ferner ist zu erkennen, dass die Erstreckung des zweiten Abschnitts 13 des elastischen Arms 11 in eine Richtung parallel zur Längsachse B an dem Teil, der mit dem ersten Abschnitt 13 verbunden ist, kleiner ist, als in einem Teil des zweiten Abschnitts 14, der sich weiter entlang der Erstreckung des zweiten Abschnitts 14 vom ersten Abschnitt 13 fort befindet. Der Übergang zwischen dem ersten Abschnitt 13 und dem zweiten Abschnitt 14 wird durch eine Einschnürung 16 gebildet.

Die Fig. 1 zeigt ferner, dass der zweite Abschnitt 14 einen ausbauchenden Teil 17 aufweist, der nach außen ausgebaucht ist.

Insbesondere die Fig. 2 zeigt, dass der Clip 1 einstückig ausgebildet ist, nämlich im Wege des Spritzgussverfahrens hergestellt wurde.

Fig. 3 zeigt den Winkel BETA zwischen dem ersten Abschnitt 13 und dem zweiten Abschnitt 14 des elastischen Arms 11, der in der in Fig. 3 dargestellten Ausführungsform ca. 45° einnimmt.

Fig. 3 zeigt zudem, dass die Ausbauchung 17 zum Kopf 2 hin mit einer Kante 20 ausgeführt ist. In Richtung auf die Spitze 4 geht die Ausbauchung 17 in eine Schrägfläche 21 über, die zur Spitze 4 hin verjüngend zuläuft. Wie insbesondere gut in Fig. 5 ersichtlich, ist die Umfangsfläche der Ausbauchung 17 abschnittweise wie ein Abschnitt eines Zylinders ausgeführt.

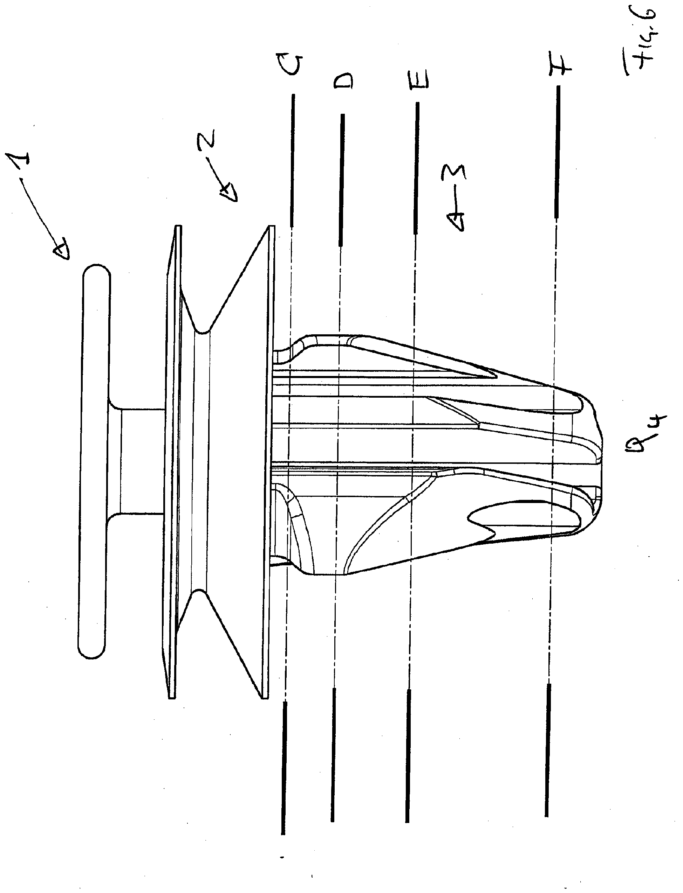

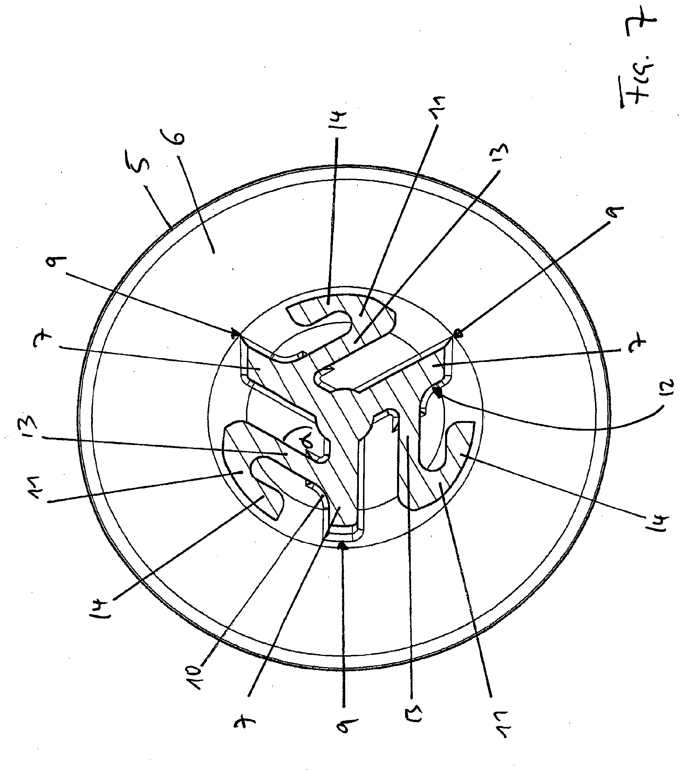

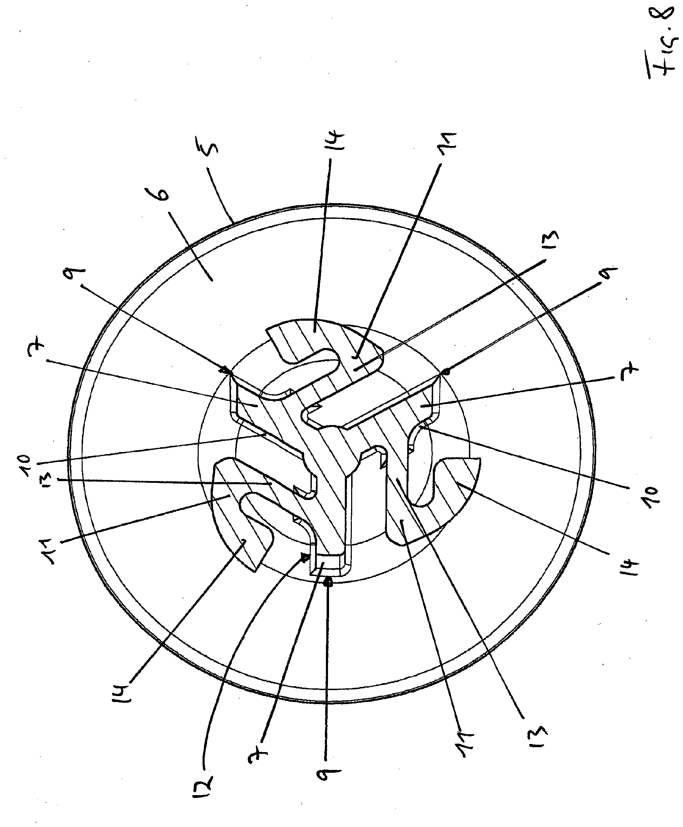

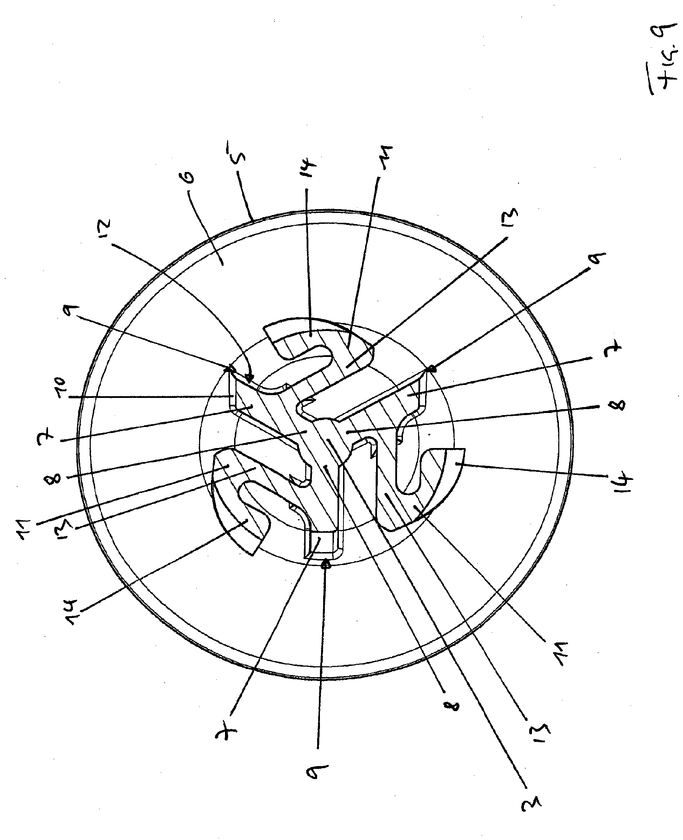

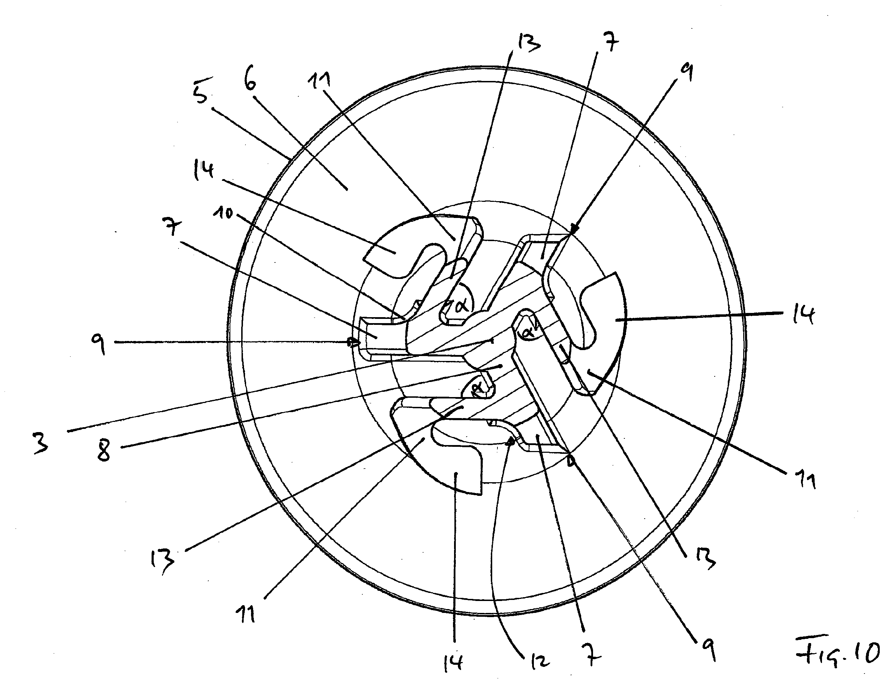

Die Fig. 6 bis 10 verdeutlichen, wie sich die Querschnittsgeometrie des Clips zur Spitze 4 hin ändert.

## Patentansprüche

1. Clip (1) mit einem Kopf (2) und einem sich entlang einer Längsachse von dem Kopf (2) erstreckenden Schaft (3), bei dem zumindest zwei Rippen (7) vorgesehen sind, jede Rippe (7) sich von einer Basis (8) der jeweiligen Rippe (7) am Schaft (3) zu einem Ende (9) der jeweiligen Rippe (7) radial beabstandet von der Basis (8) der jeweiligen Rippe (7) erstreckt,
- wobei zumindest eine Rippe (7) zumindest abschnittsweise unmittelbar mit dem Kopf (2) verbunden ist,
- wobei zumindest eine Rippe (7) einen elastischen Arm (11) aufweist, der von der jeweiligen Rippe (7) absteht, **dadurch gekennzeichnet, dass** zumindest eine Rippe (7) eine Seite (12) aufweist, die sich zwischen der Basis (8) der Rippe (7) und dem Ende (9) der Rippe (7) erstreckt, wobei der elastische Arm (11) dieser Rippe (7) von dieser Seite (12) der Rippe (7) absteht,
- wobei zumindest ein elastischer Arm (11) einen ersten Abschnitt (13) und einen zweiten Abschnitt (14) aufweist, wobei der erste Abschnitt (13) an einem Ende mit der Rippe (7) verbunden ist und an seinem anderen Ende mit dem zweiten Abschnitt (14) verbunden ist, wobei der zweite Abschnitt (14) sich in eine unterschiedliche Richtung als der erste Abschnitt (13) erstreckt,
- wobei der erste Abschnitt (13) zumindest abschnittsweise unmittelbar mit dem Kopf (2) verbunden ist.

2. Clip (1) nach Anspruch 1, **dadurch gekennzeichnet, dass** die maximale radiale Erstreckung einer ersten Rippe (7) zwischen der Basis (8) der ersten Rippe (7) und dem Ende (9) der ersten Rippe (7) unterschiedlich zu der maximalen radialen Erstreckung einer zweiten Rippe (7) zwischen der Basis (8) der zweiten Rippe (7) und dem Ende (9) der zweiten Rippe (7) ist.

3. Clip (1) nach einem der Ansprüche 1 oder 2, **dadurch gekennzeichnet, dass** zumindest drei Rippen (7) vorgesehen sind und dass für alle bis auf eine Rippe (7) der maximale radiale Abstand zwischen der Basis (8) der jeweiligen Rippe (7) und dem Ende (9) der jeweiligen Rippe (7) der gleiche ist, während für eine Rippe (7) der maximale Abstand zwischen der Basis (8) der Rippe (7) und dem Ende (9) der Rippe (7) unterschiedlich zu dem maximalen radialen Abstand zwischen der Basis (8) der anderen Rippen (7) und den jeweiligen Enden (9) der anderen Rippen (7) ist.

4. Clip (1) nach einem der Ansprüche 1 bis 3, **dadurch gekennzeichnet, dass** der erste Abschnitt (13) des elastischen Arms (11) plattenförmig ausgeführt ist, wobei die Seite (12) der Rippe (7) eben ausgebildet ist und der erste Abschnitt (13) nicht rechtwinklig zu der Seite (12) der Rippe (7) steht.

5. Clip (1) nach einem der Ansprüche 1 bis 4, **dadurch gekennzeichnet, dass** die Rippe (7) steif ist.

6. Clip (1) nach einem der Ansprüche 1 bis 5, **dadurch gekennzeichnet, dass** die Länge zumindest einer Rippe (7) in Richtung der Längsachse (B) des Schafts (3) oder parallel zur Längsachse (B) des Schafts die gleiche ist, wie die Erstreckung des Schafts (3) in Richtung der Längsachse (B) des Schafts (3).

7. Clip (1) nach einem der Ansprüche 1 bis 6, **dadurch gekennzeichnet, dass** sich zumindest eine Rippe (7) in Richtung auf das Ende des Schafts (3) hin verjüngt.

8. Clip (1) nach einem der Ansprüche 1 bis 7, **dadurch gekennzeichnet, dass** die Länge des ersten Abschnitts (13) des elastischen Arms (11) in eine Richtung parallel zur Längsachse (B) an dem Ende des ersten Abschnitts (11), das mit der Rippe (7) verbunden ist, kleiner ist, als die Länge der Rippe (7) in eine Richtung parallel zur Längsachse.

9. Clip (1) nach einem der Ansprüche 1 bis 8, **dadurch gekennzeichnet, dass** die Erstreckung des zweiten Abschnitts (14) des elastischen Arms (11) in eine Richtung parallel zu Längsachse (B) an dem Teil, der mit dem ersten Abschnitt (13) verbunden ist, kleiner ist, als die Erstreckung des zweiten Abschnitts (14) des elastischen Arms (11) in eine Richtung parallel zu Längsachse (B) in einem Teil des zweiten Abschnitts (14), der sich weiter entlang der Erstreckung des zweiten Abschnitts (14) vom ersten Abschnitt (13) fort befindet.

10. Clip (1) nach einem der Ansprüche 1 bis 9, **dadurch gekennzeichnet, dass** der zweite Abschnitt (14) einen ausbauchenden Teil hat, der nach außen ausgebaucht ist.

11. Clip (1) nach Anspruch 10, **dadurch gekennzeichnet, dass** der ausbauchende Teil eine Kante aufweist, die den Übergang einer Umfangsfläche des ausbauchenden Teils zu einer dem Kopf (2) zugewandten Fläche des zweiten Abschnitts (14) darstellt.

## Claims

1. Clip (1) with a head (2) and a shank (3) extending along a longitudinal axis of the head (2), wherein at least two ribs (7) are provided, each rib (7) extends from a base (8) of the respective rib (7) on the shank (3) to an end (9) of the respective rib (7) radially spaced from the base (8) of the respective rib (7),
- wherein at least one rib (7) is connected directly to the head (2), at least in sections,
- wherein at least one rib (7) has an elastic arm (11) which protrudes from the respective rib (7),
**characterized in that** at least one rib (7) has a side (12) which extends between the base (8) of the rib (7) and the end (9) of the rib (7), wherein the elastic arm (11) of this rib (7) protrudes from this side (12) of the rib (7),
- wherein at least one elastic arm (11) has a first section (13) and a second section (14), wherein the first section (13) is connected at one end to the rib (7) and at its other end to the second section (14), wherein the second section (14) extends in a different direction to the first section (13),
- wherein the first section (13) is connected directly to the head (2), at least in sections.

2. Clip (1) according to Claim 1, **characterized in that** the maximum radial extent of a first rib (7) between the base (8) of the first rib (7) and the end (9) of the first rib (7) is different from the maximum radial extent of a second rib (7) between the base (8) of the second rib (7) and the end (9) of the second rib (7).

3. Clip (1) according to one of Claims 1 or 2, **characterized in that** at least three ribs (7) are provided, and that for all but one rib (7) the maximum radial distance between the base (8) of the respective rib (7) and the end (9) of the respective rib (7) is the same, while for one rib (7) the maximum distance between the base (8) of the rib (7) and the end (9) of the rib (7) is different from the maximum radial distance between the base (8) of the other ribs (7) and the respective ends (9) of the other ribs (7).

4. Clip (1) according to one of Claims 1 to 3, **characterized in that** the first section (13) of the elastic arm (11) has a plate-like design, wherein the side (12) of the rib (7) is designed to be flat and the first section (13) is not perpendicular to the side (12) of the rib (7).

5. Clip (1) according to one of Claims 1 to 4, **characterized in that** the rib (7) is stiff.

6. Clip (1) according to one of Claims 1 to 5, **characterized in that** the length of at least one rib (7) in the direction of the longitudinal axis (B) of the shank (3) or parallel to the longitudinal axis (B) of the shank is the same as the extent of the shank (3) in the direction of the longitudinal axis (B) of the shank (3).

7. Clip (1) according to one of Claims 1 to 6, **characterized in that** at least one rib (7) tapers in the direction of the end of the shank (3).

8. Clip (1) according to one of Claims 1 to 7, **characterized in that** the length of the first section (13) of the elastic arm (11) in a direction parallel to the longitudinal axis (B) at the end of the first section (11), which is connected to the rib (7), is smaller than the length of the rib (7) in a direction parallel to the longitudinal axis.

9. Clip (1) according to one of Claims 1 to 8, **characterized in that** the extent of the second section (14) of the elastic arm (11) in a direction parallel to the longitudinal axis (B) on the portion which is connected to the first section (13) is smaller than the extent of the second section (14) of the elastic arm (11) in a direction parallel to the longitudinal axis (B), in a portion of the second section (14) which is located further along the extent of the second section (14) from the first section (13).

10. Clip (1) according to one of Claims 1 to 9, **characterized in that** the second section (14) has a bulging portion which bulges outwardly.

11. Clip (1) according to Claim 10, **characterized in that** the bulging portion has an edge which represents the transition of a circumferential surface of the bulging portion into a surface of the second section (14) facing the head (2).

## Revendications

1. Agrafe (1) avec une tête (2) et une tige (3) s'étendant le long d'un axe longitudinal depuis la tête (2), dans laquelle tige au moins deux nervures (7) sont prévues, chaque nervure (7) s'étendant depuis une base (8) de la nervure respective (7) sur la tige (3) à une extrémité (9) de la nervure respective (7) radialement espacée de la base (8) de la nervure respective (7),
- au moins une nervure (7) étant reliée directement à la tête (2) au moins par tronçons,
- au moins une nervure (7) présentant un bras élastique (11) dépassant de la nervure respective (7),
**caractérisée en ce qu'**au moins une nervure (7) présente un côté (12) s'étendant entre la base (8) de la nervure (7) et l'extrémité (9) de la nervure (7), le bras élastique (11) de cette nervure (7) dépassant de ce côté (12) de la nervure (7),
- au moins un bras élastique (11) présentant un premier tronçon (13) et un deuxième tronçon (14), le premier tronçon (13) étant relié à une extrémité à la nervure (7) et étant relié à son autre extrémité au deuxième tronçon (14), le deuxième tronçon (14) s'étendant dans une direction différente de celle du premier tronçon (13),
- le premier tronçon (13) étant relié directement à la tête (2) au moins par tronçons.

2. Agrafe (1) selon la revendication 1, **caractérisée en ce que** l'extension radiale maximale d'une première nervure (7) entre la base (8) de la première nervure (7) et l'extrémité (9) de la première nervure (7) est différente de l'extension radiale maximale d'une deuxième nervure (7) entre la base (8) de la deuxième nervure (7) et l'extrémité (9) de la deuxième nervure (7).

3. Agrafe (1) selon l'une quelconque des revendications 1 ou 2, **caractérisée en ce qu'**au moins trois nervures (7) sont prévues et que pour toutes les nervures (7) sauf une, la distance radiale maximale entre la base (8) de la nervure respective (7) et l'extrémité (9) de la nervure respective (7) est la même, tandis que pour une nervure (7), la distance maximale entre la base (8) de la nervure (7) et l'extrémité (9) de la nervure (7) est différente de la distance radiale maximale entre la base (8) des autres nervures (7) et les extrémités respectives (9) des autres nervures (7).

4. Agrafe (1) selon l'une quelconque des revendications 1 à 3, **caractérisée en ce que** le premier tronçon (13) du bras élastique (11) est en forme de plaque, le côté (12) de la nervure (7) étant plat et le premier tronçon (13) n'étant pas perpendiculaire au côté (12) de la nervure (7).

5. Agrafe (1) selon l'une quelconque des revendications 1 à 4, **caractérisée en ce que** la nervure (7) est rigide.

6. Agrafe (1) selon l'une quelconque des revendications 1 à 5, **caractérisée en ce que** la longueur d'au moins une nervure (7) dans la direction de l'axe longitudinal (B) de la tige (3) ou parallèle à l'axe longitudinal (B) de la tige est identique à l'extension de la tige (3) dans la direction de l'axe longitudinal (B) de la tige (3).

7. Agrafe (1) selon l'une quelconque des revendications 1 à 6, **caractérisée en ce qu'**au moins une nervure (7) se rétrécit vers l'extrémité de la tige (3).

8. Agrafe (1) selon l'une quelconque des revendications 1 à 7, **caractérisée en ce que** la longueur du premier tronçon (13) du bras élastique (11) est dans une direction parallèle à l'axe longitudinal (B) à l'extrémité du premier tronçon (11) reliée à la nervure (7) est inférieure à la longueur de la nervure (7) dans une direction parallèle à l'axe longitudinal.

9. Agrafe (1) selon l'une quelconque des revendications 1 à 8, **caractérisée en ce que** l'extension du deuxième tronçon (14) du bras élastique (11) dans une direction parallèle à l'axe longitudinal (B) au niveau de la partie reliée au premier tronçon (13) est plus petite que l'extension du deuxième tronçon (14) du bras élastique (11) dans une direction parallèle à l'axe longitudinal (B) dans une partie du deuxième tronçon (14) qui est située plus loin le long de l'extension du deuxième tronçon (14) à l'opposé du premier tronçon (13).

10. Agrafe (1) selon l'une quelconque des revendications 1 à 9, **caractérisée en ce que** le deuxième tronçon (14) comporte une partie renflée vers l'extérieur.

11. Agrafe (1) selon la revendication 10, **caractérisée en ce que** la partie renflée présente un bord qui constitue la transition entre une surface périphérique de la partie renflée et une surface du deuxième tronçon (14) tournée vers la tête (2).
